# EUROPÄISCHE PATENTANMELDUNG

(11) **EP 1 264 717 A2**
(43) Veröffentlichungstag der Anmeldung: **11.12.2002**
(21) Anmeldenummer: 02007751.7
(22) Anmeldetag: 05.04.2002
(51) Int. Cl.: B60H 1/00

(54) **Leitungsbausatz für Klimaanlagen und Verfahren zum Herstellen eines Leitungsbausatzes**

(30) Priorität: 07.06.2001 DE 10127745
(71) Anmelder: Ehs, Eugen, 80797 München (DE)
(72) Erfinder: Ehs, Eugen, 80797 München (DE)
(74) Vertreter: Grünecker, Kinkeldey, Stockmair & Schwanhäusser Anwaltssozietät

(57) **Zusammenfassung**

Ein Leitungsbausatz (L) für Klimaanlagen, insbesondere Fahrzeug-Klimaanlagen, der eine an vorbestimmte Einbaugegebenheiten angepasste gebogene Form besitzt, weist eine kältemitteldichte Elastomerschlauch-Seele (S) und wenigstens eine die Seele stützende Faserhülle (F) auf, die mit einer verfestigten Kunststoffimprägnierung (K) versehen und in der gebogenen Form fixiert ist, wobei an beiden Enden Anschlussteile (D) druckdicht eingegliedert sind.

## Beschreibung

Die Erfindung betrifft einen Leitungsbausatz gemäß Oberbegriff des Patentanspruchs 1 und ein Verfahren zum Herstellen eines Leitungsbausatzes gemäß Oberbegriff des Patentanspruchs 11.

Leitungsbausätze für Klimaanlagen, insbesondere Fahrzeug-Klimaanlagen, verbinden voneinander getrennte Anschlusspunkte im Kältemittelkreislauf. Da die Individualpositionen der Anschlusspunkte vorbestimmt sind, gegebenenfalls zwischen den einzelnen Anschlusspunkten Hindernisse wie andere Einbauteile vorliegen, und der Zusammenbau einer Klimaanlage möglichst schnell und bequem zu bewerkstelligen sein soll, ist jeder Leitungsbausatz mit der erforderlichen Form vorgebogen. Insbesondere in Fahrzeug-Klimaanlagen bestehen die Leitungsbausätze aus Aluminiumrohren mit angeschweißten oder angelöteten, metallischen Anschlussteilen. Diese Leitungsbausätze aus Aluminiumrohren sind nicht nur teuer, sondern auch relativ schwer, zumal in vielen Fällen relativ große Leitungslängen zu verlegen sind, wenn, z.B. wie in einem Fahrzeug, die einzelnen Komponenten der Klimaanlage aus Einbaugründen oder anderen Gründen weit voneinander entfernt liegen. Aluminium bietet andererseits den Vorteil, gegen Kältemittel unempfindlich zu sein, und die auftretenden Drücke, Temperaturen und Temperaturwechsel wie auch betriebsbedingte oder fahrzeugbedingte Erschütterungen zu vertragen.

Aus EP 0 867 320 A sind Überlegungen bekannt, Leitungsabschnitte einer Klimaanlage aus Spritzguss- oder Extrusionsrohren aus langfaserverstärkten Thermoplasten oder aus verstärkten Kunststoffschläuchen (Hochdruckhydraulikschläuche) auszubilden. Dieses Prinzip hat sich noch nicht als praxistauglich erweisen können.

Der Erfindung liegt die Aufgabe zugrunde, einen Leitungsbausatz der eingangs genannten Art sowie ein Verfahren zum Herstellen eines Leitungsbausatzes anzugeben, mit denen gegenüber konventionellen Leitungsbausätzen mit Aluminium bei zumindest gleicher Gebrauchstüchtigkeit deutlich Gewicht und Kosten einzusparen sind.

Die gestellte Aufgabe wird mit einem Leitungsbausatz entsprechend den Merkmalen des Anspruchs 1 und verfahrenstechnisch mit den Merkmalen des Anspruchs 11 gelöst.

Überraschend werden wird mit einem Leitungsabschnitt, der aus einer Elastomerschlauch-Seele und wenigstens einer Faserhülle besteht, die mit einer verfestigten Kunststoffimprägnierung versehen ist und die gebogene Form fixiert, nicht nur die für Klimaanlagen geltende Anforderung an Druckfestigkeit, Kältemittelresistenz, Vibrationsunempfindlichkeit und Formtreue erfüllt, sondern auch erheblich Gewicht eingespart. Ein Leitungsbausatz mit diesen Merkmalen ist gegenüber einem herkömmlichen Leitungsbausatz mit einer Aluminiumleitung um häufig mehr als 20 % leichter. Dies spielt insbesondere bei Fahrzeug-Klimaanlagen eine wichtige Rolle, weil Fahrzeughersteller aus naheliegenden Gründen bei Ausstattungszubehör wie einer Klimaanlage so viel Gewicht wie möglich zu sparen vorschreiben. Zur Gewichtseinsparung trägt bei, dass wegen der Festlegung durch die Kunststoffimprägnierung Anschlussteile aus Kunststoff einsetzbar sind.

Die Herstellung des Leitungsbausatzes ist verfahrenstechnisch einfach, weil die zunächst flexible Faserhülle ohne nennenswerte Probleme auf die Schlauchseele aufgebracht bzw. die Schlauchseele bequem in die Faserhülle eingebracht werden kann, und dann diesem noch elastischen Zwischenprodukt die gewünschte Form zu geben ist, ehe es durch die Kunststoffimprägnierung druckfest und in der gebogenen Form fixiert wird. Die Kunststoffimprägnierung stabilisiert die Faserhülle, so dass der Leitungsbausatz die durch die Seele allein zunächst nicht gegebene Druckfestigkeit, Vibrationsresistenz, Formtreue, Temperaturunempfindlichkeit und dgl. erbringt, und die endgültige Form durch die sich verfestigende Kunststoffimprägnierung fixiert wird. Die Haftung und Verfestigung der Kunststoffimprägnierung bietet den Vorteil, die Anschlussteile gleich integrieren zu können.

Der Anschlussteil ist in den Leitungsbausatz integriert, indem er mit einem Rohransatz außen auf die Faserhülle aufgesteckt oder zwischen die Faserhülle und die Seele bzw. sogar in die Seele eingesteckt und durch die Kunststoffimprägnierung an der Faserhülle und/oder der Seele fixiert ist. Es lässt sich die Flexibilität des Zwischenproduktes vor dem Verfestigen der Kunststoffimprägnierung nutzen, um den Anschlussteil in der jeweils richtigen Position oder Anordnung exakt vorzupositionieren.

Besonders einfach steht der Rohransatz des Anschlussteils mit einem Halteabschnitt über das Ende der Seele vor, so dass die bis dorthin verlängerte Faserhülle mittels der Kunststoffimprägnierung den Anschlussteil abgedichtet fixiert.

Zweckmäßig besteht die Seele aus EPDM (Ethylenpropylen-Dien-Kautschuk) oder HNBR (hydrierter Nitrilkautschuk). Diese synthetischen Kautschuksorten erbringen die notwendige Dichtigkeit für leicht flüchtige Kältemittel, z.B. R 134 a, und werden von diesen Medien nicht angegriffen. Ferner haben diese Elastomere die zur Formung erforderliche Flexibilität. Solche Schläuche sind in verschiedenen Spezifikationen und Größen handelsüblich und kostengünstig als Meterware erhältlich.

Damit die Druckfestigkeit der Faserhülle nach dem Verfestigen der Kunststoffimprägnierung gleichförmig ist, sollte die Faserhülle ein gestricktes, gewebtes, geflochtenes oder gewirktes strumpfartiges Substrat aus hochfesten Fasern, Fäden, Garnen oder Bändern sein. Das Substrat erbringt bei niedrigem Gewicht hohe Festigkeit und ist im Ausgangszustand flexibel. Mit der verfestigten Kunststoffimprägnierung ist es druckfest, dicht und formstabil.

Besonders zweckmäßig enthält die Faserhülle Glas-, Kohlenstoff- oder Aramid-Fasern-, -Fäden, -Garne oder -Bänder, oder Mischungen davon, und zwar in einem formschlüssigen Verbund. Diese Materialien sind bei hoher Festigkeit sehr leicht. Sie bilden mit der Kunststoffmatrix ein druckfestes und dichtes Gebilde.

Besonders zweckmäßig ist die Faserhülle ein Prepreg-Glasfasersubstrat in Schlauchform. Solche Prepregs sind handelsüblich in unterschiedlichsten Spezifikationen zu beziehen, trocken, nicht klebrig und trotz der Kunststoffimprägnierung flexibel. Sie lassen sich deswegen bequem handhaben. Die Kunststoffimprägnierung wird durch thermische Behandlung (z.B. bei 180 - 200°C) aufgeschmolzen und geht in erstarrtem oder ausgehärtetem Zustand einen innigen, sehr tragfähigen Verband mit den Glasfasern ein. Das Prepreg wird maschinell aus den bereits imprägnierten Fasern gewebt, gestrickt oder geflochten.

Die Kunststoffimprägnierung besteht zweckmäßig aus Thermoplasten, wie beispielsweise Polypropylen, oder ist ein Duroplast, beispielsweise ein Epoxidharz. Bei einem Duroplasten kann der Aushärtevorgang beispielsweise durch einen Beschleuniger oder Härter und gegebenenfalls ohne Beheizung ablaufen. Duroplaste können zu wünschenswert hoher Formstabilität in dem Leitungsbausatz beitragen.

Gegebenenfalls ist in oder an der Faserhülle noch wenigstens ein Versteifungselement vorgesehen, das zur Formstabilität des Leitungsbausatzes, z.B. für die Montage, beiträgt.

Verfahrensgemäß wird die Seele beim Fixieren der Form unter Innendruck gesetzt, so dass das gesamte Gebilde unter Spannung steht, die mit dem Erstarren oder Aushärten der Kunststoffimprägnierung eingefroren wird. Außerdem werden durch den Innendruck Knicke der Seele vermieden und saubere Bögen gebildet.

Der Innendruck in der Seele komprimiert über die sich expandierende Seele die Faserhülle mit der Kunststoffimprägnierung an der Innenwand des Formhohlraums, um die Kunststoffimprägnierung gleichmäßig zu verteilen und die imprägnierte Faserhülle zu verdichten.

Zweckmäßigerweise wird die Kunststoffimprägnierung durch einen Heizvorgang aufgeschmolzen und dann zum Aushärten gebracht.

Die Kunststoffimprägnierung wird z.B. vor oder nach dem Einbringen der Seele in die Faserhülle aufgebracht. Hierfür bieten sich unterschiedliche Verfahren wie Aufsprühen, Tränken oder dgl. an.

Besonders zweckmäßig ist jedoch die Faserhülle ein herstellerseitig vorimprägnierter Prepregschlauch, dessen Kunststoffimprägnierung durch einen Heizvorgang aufgeschmolzen und zum Fixieren der gebogenen Form und zum Verdichten der Faserhülle ausgehärtet wird. Dabei ist ein Innendruck in der Seele von ca. 6 bis 10 bar zweckmäßig.

Ein weiterer Vorteil des Verfahrens liegt darin, dass der Leitungsbausatz nicht nur mit rundem Querschnitt ausgebildet werden kann, sondern beliebig wählbare Querschnitt möglich sind, wie ovale oder vierkantige oder rechteckige Querschnitte.

Ferner ist es möglich, auf die Seele zumindest abschnittsweise mehr als eine Faserhülle aufzuziehen, beispielsweise um bestimmte Abschnitte des Leitungsbausatzes besonders stabil auszubilden.

Die Anschlussteile lassen sich verfahrenstechnisch einfach in den Leitungsbausatz eingliedern, wenn jeder Rohransatz mit einem Halteabschnitt außerhalb des Endes der Seele bleibt und die Faserhülle auf dem Halteabschnitt festgelegt wird. Gegebenenfalls kann zusätzlich eine Spannschelle oder dgl. aus Sicherheitsgründen angebracht werden. Die Anschlussteile sollten ein Temperaturverhalten ähnlich der Faserhülle haben. Leicht und druckfest sind spritzgussgeformte Anschlussteile aus langfaserverstärktem Thermoplast, wie mit besonders langen Glasfasern ausgerüstetem Polyamid 6.6.

Anhand der Zeichnung werden Ausführungsformen des Erfindungsgegenstandes erläutert. Es zeigen:
- Fig. 1: eine schematische Perspektivansicht eines einfachen Leitungsbausatzes für eine Klimaanlage,
- Fig. 2: einen Querschnitt durch den Leitungsbausatz, bei der Formgebung, und
- Fig. 3: einen Längsschnitt eines Teils eines Leitungsbausatzes mit integriertem Anschlussteil.

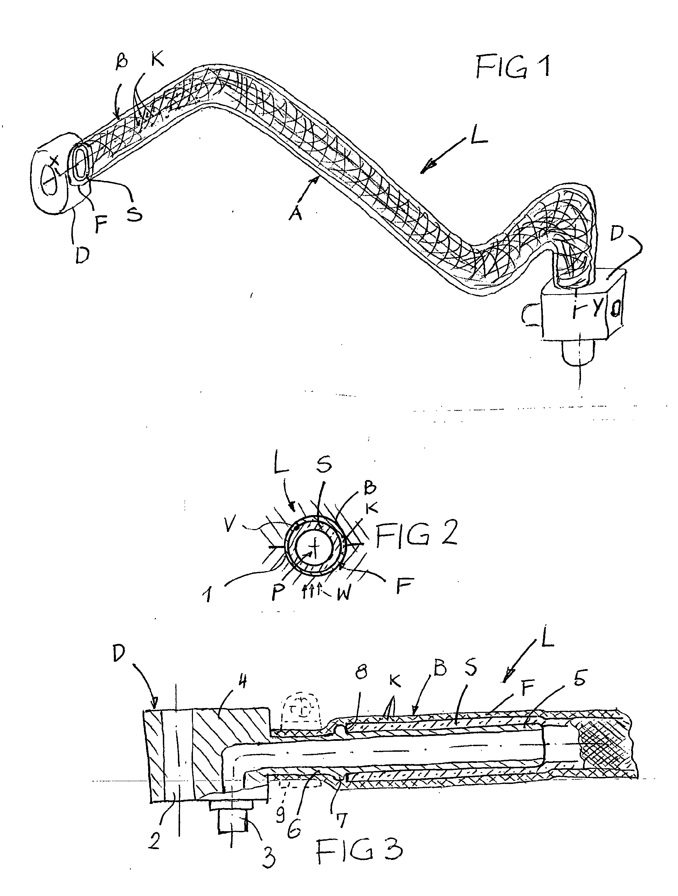

Ein Leitungsbausatz L für eine Klimaanlage, insbesondere eine Fahrzeugklimaanlage, dient zum Verbinden zweier Anschlussstellen, die im Raum vorbestimmte Positionen und Orientierungen X und Y haben. Da zwischen den Positionen bei X und Y gegebenenfalls Hindernisse vorliegen, hat der Leitungsbausatz L eine bestimmte, ggfs. sogar räumlich gebogene Form entsprechend den Einbaugegebenheiten. Der Leitungsbausatz L ist in Fig. 1 ein Leitungsabschnitt A einer vorbestimmten Länge mit mehreren Biegungen, die vorgeformt und fixiert sind. An den Enden sind Anschlussteile D druckfest eingegliedert. Im Inneren des Leitungsabschnittes A ist eine Seele S aus einem kältemittelfesten, druckdichten Elastomerschlauch vorgesehen, beispielsweise aus EPDM oder HNBR. Die Seele S wird von wenigstens einer Faserhülle F umgegeben, die durch eine ausgehärtete Kunststoffimprägnierung K stabilisiert ist, in welche die Fasern, Garne, Fäden oder Bänder, die die Faserhülle F bilden, eingebettet und stoffschlüssig eingebunden sind und die erforderliche Druckfestigkeit des Leitungsbausatzes. Als Material für die Faserhülle F eignen sich besonders Glas, Kohlenstoff, Aramid oder anderes hochfestes Material in Faser-, Faden-, Garnoder Bandform. Die Faserhülle F ist ein gewebtes, gestricktes, geflochtenes oder gewirktes, strumpfartiges Substrat, B, in welchem die Fasern einander übergreifen und einander abstützen und durch die Matrix der Kunststoffimprägnierung K stabilisiert sind. Der Außendurchmesser beträgt ca. 10 mm, die Seele S hat eine Wandstärke von ca. 1,0 mm.

Zweckmäßigerweise wird der Leitungsbausatz L mit den integrierten Anschlussteilen D (Fig. 3) gefertigt, um in herkömmlicher Weise mit Komponenten der Klimaanlage druckdicht und haltbar verbunden werden zu können.

Bei der Herstellung des Leitungsbausatzes L der Fig. 1 oder Fig. 3 wird zunächst ein strumpfartiges Substrat B, d.h. die Faserhülle F, in flexiblem Zustand auf die Seele S aufgezogen, oder wird die Seele S eingezogen. Dazu kann eine Haltevorrichtung für das Strumpfende benutzt werden und/oder wird das Strumpfende aufgeweitet und durch Anschmelzen fixiert. Die Kunststoffimprägnierung K kann bereits aufgebracht sein oder wird dann erst aufgebracht, z.B. durch Aufsprühen oder Tränken. Die Anschlussteile D werden eingesetzt. Das Zwischenprodukt wird in Fig. 2 in einen Formhohlraum 1 eingelegt, der die spätere Form des Leitungsbausatzes L bestimmt. Dann wird die Seele S mit Innendruck P beaufschlagt, z.B. mit Druckluft oder mit hydraulischem Druck von ca. 6 bis 10 bar, so dass über die sich expandierende Seele das Substrat B gegen die Formhohlraum-Wand angedrückt wird. Die Kunststoffimprägnierung K wird aufgeschmolzen und härtet dann aus. Sie fixiert die Form und verleiht mit der Faserhülle F der Seele S die notwendige Innen-Druckfestigkeit. Dabei kann die Seele S mit der Faserhülle F verkleben. Gegebenenfalls wird die Kunststoffimprägnierung durch einen Aufheizvorgang W zum Aufschmelzen gebracht, um sich gleichmäßig zu verteilen, ehe sie aushärtet. Ein Duroplast kann auch ohne Aufheizen durch Zusätze zum Aushärten gebracht werden.

Die Kunststoffimprägnierung kann ein Thermoplast oder eine Duroplast sein. Besonders geeignet ist thermoplastisches Polypropylen. Als Duroplast kann beispielsweise ein Epoxidharz verwendet werden, das mit einem Härter gegebenenfalls ohne Heizvorgang aushärtet. Nach der Entnahme des Leitungsbausatzes aus dem Formhohlraum, gegebenenfalls nach einer anschließenden Abkühlphase, ist der Leitungsbausatz gebrauchsfertig.

Besonders zweckmäßig ist das Substrat B ein Pregpreg-Schlauch aus geflochtenen oder gestrickten oder gewebten Glasfasern, der bereits herstellerseitig mit der Kunststoffimprägnierung, z.B. mit Polypropylen, ausgerüstet ist. Das Prepreg-Substrat B ist bei der Verarbeitung trocken und flexibel. Die Kunststoffimprägnierung schmilzt beim Heizvorgang auf und härtet anschließend aus. Falls erforderlich, kann zuvor oder in einem zweiten Arbeitsschritt wenigstens eine weitere Faserhülle aufgezogen und auch mit einer Kunststoffimprägnierung fixiert werden. Die Anschlussteile D werden gleichzeitig druckfest eingegliedert. Sie befinden sich mit dem Leitungsabschnitt im Formhohlraum.

Im Leitungsbausatz L in Fig. 3 ist der Anschlussteil D beispielsweise ein Kunststoff-Spritzformteil mit einer Fixierbohrung 2, einem Steckanschluss 3 und einem Gehäuse 4, von dem ein Rohransatz 5 absteht. Der Rohransatz 5 weist einen Halteabschnitt 6 und beispielsweise eine Positionierungswulst 7 auf, die einerseits zum Begrenzen der Eindringtiefe des Rohransatzes dient und andererseits ein Haltemittel zum Festlegen des Rohransatzes 5 bildet. Der Rohransatz 5 ist hier in das freie Ende 8 der Seele S eingesteckt. Die Faserhülle F bzw. das strumpfartige Substrat B ist länger bemessen als die Seele S, so dass die Faserhülle F über den Halteabschnitt 6 reicht. Zum Fixieren der Faserhülle F auf dem Halteabschnitt 6 wird die Kunststoffimprägnierung K benutzt. Gegebenenfalls kann um den Halteabschnitt 6 eine Spannschelle 9 oder dgl. (gestrichelt angedeutet) montiert werden. Beim Aushärten wird die Seele S zweckmäßigerweise mit Innendruck beaufschlagt.

Die Innendruckbeaufschlagung bei der Ausformung des Leiterbausatzes ist wichtig, damit das Substrat B bzw. die Faserhülle F mit der flüssigen Kunststoffimprägnierung K dicht wird und die Seele S fest umgreift. Außerdem werden unerwünschte Knicke der Seele S vermieden.

Der Leitungsbausatz L ist für einen Arbeitsdruck von etwa 30 bar geeignet, und widersteht Prüfzyklen mit Drücken bis zu 150 bar bei 150°C. Da der Leitungsbausatz aus zumindest verwandten Materialien besteht, ist er gut zu entsorgen bzw. zu recyceln. Er lässt sich kostengünstiger herstellen, auch wegen der preiswerten Materialien, als herkömmliche Leitungsbausätze mit Aluminiumrohren, und ist für den gleichen Einbaufall um mindestens 20 % leichter.

## Patentansprüche

1. Leitungsbausatz (L) für Klimaanlagen, insbesondere Fahrzeug-Klimaanlagen, bestehend aus einem in einer an vorbestimmte Einbaugegebenheiten (X, Y) angepassten Form gebogenen Leitungsabschnitt (A) mit an beiden Enden abgedichtet festgelegten Anschlussteilen (D), **dadurch gekennzeichnet, dass** der Leitungsabschnitt (A) eine kältemitteldichte Elastomerschlauch-Seele (S) und wenigstens eine die Seele druckfest armierende Faser-Hülle (F) aufweist, die mit einer verfestigten, die gebogene Form fixierenden Kunststoffimprägnierung (K) versehen ist.

2. Leitungsbausatz nach Anspruch 1, **dadurch gekennzeichnet, dass** der Anschlussteil (D) einen Rohransatz (5) aufweist, der außen auf die Faser-Hülle (F) aufgesteckt oder zwischen die Faserhülle (F) und die Seele (S) bzw. in die Seele (S) eingesteckt und durch die Kunststoffimprägnierung an der Faserhülle und/oder der Seele fixiert ist.

3. Leitungsbausatz nach Anspruch 2, **dadurch gekennzeichnet, dass** der Rohransatz (5) einen über das Ende (8) der Seele (S) vorstehenden Halteabschnitt (6) aufweist, und dass sich die Faserhülle (F) über das Ende (8) der Seele (S) hinweg bis auf den Halteabschnitt (6) erstreckt und den Halteabschnitt mittels der Kunststoffimprägnierung druckdicht festlegt.

4. Leitungsbausatz nach Anspruch 1, **gekennzeichnet durch** eine EPDM- oder HNBR-Seele.

5. Leitungsbausatz nach Anspruch 1, **dadurch gekennzeichnet, dass** die Faserhülle (F) ein aus Fasern, Fäden, Garnen oder Bändern gestricktes oder gewebtes oder geflochtenes oder gewirktes strumpfartiges Substrat (B) aufweist.

6. Leitungsbausatz nach Anspruch 1, **dadurch gekennzeichnet, dass** die Faserhülle (F) Glas-, Kohlenstoff- oder Aramid-Fasern oder Mischungen davon aufweist.

7. Leitungsbausatz nach Anspruch 1, **dadurch gekennzeichnet, dass** die Faserhülle (F) ein mit der Kunststoffimprägnierung (K) vorbehandelter Prepreg-Glasfaser-Strumpf ist.

8. Leitungsbausatz nach Anspruch 1, **dadurch gekennzeichnet, dass** die Kunststoffimprägnierung (K) einen Thermoplasten oder einen Duroplasten enthält, vorzugsweise Polypropylen oder ein Epoxidharz.

9. Leitungsbausatz nach Anspruch 1, **dadurch gekennzeichnet, dass** auf oder in die Faserhülle (F) oder zwischen die Seele (S) und die Faserhülle (F) ein Versteifungselement (V) eingegliedert ist.

10. Leitungsbausatz nach Anspruch 1, **dadurch gekennzeichnet, dass** die Anschlussteile (D) Spritzguss-Formteile aus langfaserverstärkten Thermoplasten, vorzugsweise PA 6.6 oder PP, sind.

11. Verfahren zum Herstellen eines in eine an vorbestimmte Einbaugegebenheiten (X, Y) angepasste Form gebogenen Leitungsabschnitts (A) als Leitungsbausatz (L) für Klimaanlagen, insbesondere Fahrzeug-Klimaanlagen, **dadurch gekennzeichnet, dass** eine Elastomerschlauch-Seele (S) in eine strumpfartige flexible Faserhülle (F) eingebracht, mit der Faserhülle in die gebogene Form überführt und die gebogene Form mit einer sich verfestigenden Kunststoffimprägnierung (K) der Faserhülle (F) fixiert wird.

12. Verfahren nach Anspruch 11, **dadurch gekennzeichnet, dass** beim Fixieren der Form die Seele (S) unter Innendruck (P) gesetzt wird, vorzugsweise einen Innendruck von ca. 6 bis ca. 10 bar.

13. Verfahren nach Anspruch 11, **dadurch gekennzeichnet, dass** die Seele (S) mit der aufgebrachten Faserhülle (F) in einen der gebogenen Form entsprechenden Formhohlraum (1) eingesetzt, die Seele (S) mit Innendruck (P) beaufschlagt, und die mit der Kunststoff-Imprägnierung (K) versehen Faserhülle (F) mit der Seele (S) an die Innenwand des Formhohlraums (1) angepresst wird.

14. Verfahren nach Anspruch 11, **dadurch gekennzeichnet, dass** die gebogene Form durch einen Heizvorgang (W) fixiert wird.

15. Verfahren nach Anspruch 11, **dadurch gekennzeichnet, dass** die Kunststoffimprägnierung (K) vor oder nach dem Einbringen der Seele (S) in die Faserhülle (F) auf die Faserhülle (F) aufgebracht wird.

16. Verfahren nach Anspruch 11, **dadurch gekennzeichnet, dass** die Seele (S) in eine vorimprägnierte, trockene und flexible Prepreg-Faserhülle (F) eingebracht wird, vorzugsweise durch Überziehen der Faserhülle, und dass die Kunststoffimprägnierung (K) mit einem Heizvorgang aufgeschmolzen und unter Fixieren der gebogenen Form bei unter Innendruck (P) gesetzter Seele ausgehärtet wird.

17. Verfahren nach wenigstens einem der Ansprüche 11 bis 16, **dadurch gekennzeichnet, dass** in jedes Ende (8) der Seele (S) ein Rohransatz (5) eines Anschlussteils (D) eingeführt wird und mittels der Kunststoffimprägnierung (K) dicht festgelegt wird.

18. Verfahren nach wenigstens einem der Ansprüche 11 bis 17, **dadurch gekennzeichnet, dass** ein einen Halteabschnitt (6) aufweisender Rohransatz (5) so weit eingeführt wird, dass der Halteabschnitt (6) über das Ende (8) vorsteht, dass die Faserhülle (F) über das Ende (8) der Seele hinweg bis auf den Halteabschnitt (6) aufgebracht wird, und dass der Rohransatz zumindest mittels der verfestigten Kunststoffimprägnierung (K) in der Faserhülle (F) fixiert wird.

19. Verfahren nach Anspruch 18, **dadurch gekennzeichnet, dass** Anschlussteile (D) aus einem Werkstoff mit ähnlichem Temperaturverhalten wie das der Faserhülle (F) eingesetzt werden.
